Europäisches Patentamt

European Patent Office

Office européen des brevets

(19)

(11) Numéro de publication: **0 098 763**
**B1**

(12) # FASCICULE DE BREVET EUROPEEN

(45) Date de publication du fascicule du brevet:
**11.03.87**

(51) Int. Cl.⁴: **H 04 N 7/13,** H 04 M 11/00

(21) Numéro de dépôt: **83401201.5**

(22) Date de dépôt: **10.06.83**

(54) Procédés et dispositifs de télécommunications visuelles, notamment à l'usage des sourds.

(30) Priorité: **18.06.82 FR 8210759**

(43) Date de publication de la demande:
**18.01.84 Bulletin 84/3**

(45) Mention de la délivrance du brevet:
**11.03.87 Bulletin 87/11**

(84) Etats contractants désignés:
**DE GB NL SE**

(56) Documents cités:
**US - A - 3 767 847**
**US - A - 4 027 331**
**US - A - 4 090 221**

**CONFERENCE RECORD OF THE INTERNATIONAL CONFERENCE ON COMMUNICATIONS, tenu à Denver, Colorado, 14-18 juin 1981, volume 2 de 4, pages 22.2.1 - 22.2.3. R. H. WALLIS et al.: "Video tele-conferencing at 9600 baud"**
**REVIEW OF THE ELECTRICAL COMMUNICATION LABORATORIES, vol. 25, no. 11-12, novembre-décembre 1977, pages 1337-1346, Tokyo, JP. H. YASUDA et al.: "Tridec system design"**
**INTERNATIONALE ELECTRONISCHE RUNDSCHAU, vol. 27, no. 1, janvier 1973, pages 2-7, Berlin, DE. H. WENDT: "Interframe-Codierung für Videosignale"**

(73) Titulaire: **INRIA INSTITUT NATIONAL DE RECHERCHE EN INFORMATIQUE ET EN AUTOMATIQUE, Domaine de Voluceau, Rocquencourt F-78150 Le Chesnay (FR)**

(72) Inventeur: **Abramatic, Jean-François, 1, résidence Clos Gally, F-78590 Noisy Le Roi (FR)**
Inventeur: **Nadler, Morton, 17, les Huppes Domaine Saint-François d'Assise, F-78170 La Celle Saint Cloud (FR)**
Inventeur: **Letellier, Philippe, 31, rue Borgnis-Debordes, F-78000 Versailles (FR)**

(74) Mandataire: **Plaçais, Jean-Yves et al, Cabinet Netter 40, rue Vignon, F-75009 Paris (FR)**

EP 0 098 763 B1

## Description

L'invention est relative aux télécommunications, et notamment aux télécommunications par lignes téléphoniques ou télématiques. Elle vise plus particulièrement la transmission d'images sur de telles liaisons, étant entendu que ces liaisons téléphoniques ne sont pas limitées aux câbles ou lignes de type électrique mais englobent également tous moyens de liaison de type hertzien, à fibres optiques, etc.

Traditionnellement, les lignes téléphoniques ont été développées, et installées sous forme de réseaux, pour la transmission de communications vocales. Plus récemment, elles ont trouvé application à la transmission d'informations de type numérique, grâce notamment à l'utilisation de modulateurs-démodulateurs connus sous l'appellation de MODEM. De telles liaisons téléphoniques sont caractérisées par des performances bien adaptées à la transmission de signaux analogiques à des fréquences n'excédant pas environ 4 kHz. Lorsqu'elles sont appliquées à la transmission de signaux numériques, elles autorisent en général des cadences de transmission pouvant atteindre au maximum 4800 bauds. Ces performances limitent le volume des informations qui peuvent être transmises dans un intervalle de temps déterminé.

Ainsi, si les lignes téléphoniques sont bien adaptées à la transmission de la parole humaine ou de messages informatiques sous la forme de signaux binaires à des cadences relativement peu élevées, elles ne sont pas aptes à la transmission en temps réel d'images susceptibles d'évoluer rapidement dans le temps. La transmission d'une image nécessite en effet le transfert d'un volume d'informations relativement considérable par rapport à celui d'un message vocal. L'image doit être divisée en zones quasi-ponctuelles d'autant plus petites que la définition avec laquelle on cherche à réaliser la transmission est élevée. Pour chacune de ces zones ponctuelles, un signal représentant le niveau d'éclairement relatif de cette zone doit être produit. L'ensemble des signaux doit être alors transmis en général en série sous la forme d'une séquence. Chaque séquence correspond à une image et le niveau du signal à un instant donné de cette séquence correspond à l'éclairement d'un point correspondant de l'image transmise.

La transmission de telles séquences est bien connue dans les systèmes de télévision. Dans ces systèmes, pour la transmission de scènes en mouvement, la cadence de renouvellement des images transmises est relativement élevée. Elle nécessite des liaisons capables de transmettre une bande de fréquence dont la largeur est sans aucune mesure avec celle des liaisons téléphoniques simples.

On a déjà cherché à améliorer le confort des communications téléphoniques en transmettant l'image des interlocuteurs l'un à l'autre à l'aide d'un tel système désigné en général sous l'appellation de visiophone. Le coût de ces systèmes a entravé leur développement en raison notamment du fait que la puissance de transmission d'informations nécessaire pour obtenir des images de qualité convenable est environ vingt à quarante fois plus élevée que celle d'une ligne téléphonique destinée à la parole seulement.

On a déjà proposé, dans le cas où les images à transmettre sont relativement statiques, des systèmes visant à réduire le débit des informations à transmettre. Dans un tel système, décrit par exemple dans la communication intitulée: VIDEO TELECONFERENCING AT 9600 BAUDS par Robert H. Wallis et William K. Pratt parue dans "IEEE Picture Coding Symposium, Montréal 1981", une image d'un sujet à transmettre est produite, par exemple le buste d'un interlocuteur dans une conférence à distance, à l'aide d'une caméra opto-électronique. Les signaux électriques résultants sont soumis à un processus de binarisation, à l'issue duquel chaque point de l'image est représenté par un signal capable de prendre seulement deux valeurs. La séquence obtenue pour l'image est alors soumise à un processus de codage permettant de comprimer l'information contenue dans cette séquence en vue de sa transmission sur une ligne télématique à une cadence d'environ 9600 bits par seconde. La qualité des images obtenues par ce procédé est relativement médiocre, même pour une cadence de renouvellement limitée à quelques images par seconde seulement. Cette technique n'est donc pas adaptée à la retransmission en temps réel de scènes dans lesquelles un mouvement doit être produit avec une certaine précision.

La présente invention a pour but de fournir un procédé et un dispositif de transmission en temps réel d'informations visuelles variables dans le temps à l'aide d'une ligne téléphonique ou d'une ligne télématique de performances équivalentes en ce qui concerne son débit. Elle vise particulièrement la transmission d'information correspondant à des mouvements du corps humain, par exemple à des gestes ou à des mouvements de lèvres. A cet égard, une application de l'invention consiste en la fourniture d'un système de télécommunications pour des personnes atteintes de surdité et qui sont capables de communiquer entre elles par le langage des signes ou de lire ou de comprendre les paroles d'une personne par la lecture du mouvement de ses lèvres.

A cet effet, dans le procédé selon l'invention on effectue une prise de vue; pour chaque image saisie, on convertit en signaux binaires les informations correspondant à chaque point de l'image; on code et on transmet les signaux binaires ainsi obtenus en un point du réseau; on recueille ces signaux en un autre point du réseau afin de visualiser l'image correspondante. Selon l'invention, dans chaque séquence de signaux on détecte les signaux caractéristiques de contours dans l'image saisie. Ce procédé peut être mis en œuvre selon plusieurs modalités. On peut par exemple ne transmettre que des variations de contours. On peut également transmettre périodiquement une fraction de l'image de contours, ou un texte visualisé aidant par exemple à l'identification du correspondant.

La mise en œuvre de ce procédé se réalise grâce à un dispositif capable d'élaborer en temps réels des signaux électriques représentatifs d'informations visuelles, comprenant une caméra, des moyens pour binariser les signaux correspondant à chaque point de l'image dans une séquence, et des moyens de codage des séquences de signaux élaborés. Le dispositif selon l'invention se caractérise par l'existence entre la caméra et les moyens de codage d'un dispositif d'extraction de contours sensible à des écarts du niveau d'éclairement de points voisins à l'intérieur de chaque image. Ce dispositif peut présenter en outre différentes caractéristiques particulières. Il peut comporter des moyens de sélection et de filtrage, en particulier des points isolés. Il peut comporter une mémoire, destinée à permettre l'évaluation de la variation des contours, ou des moyens d'échantillonnage.

L'invention comporte également un dispositif-récepteur de signaux représentatifs d'informations visuelles. Ce dispositif comprend un dispositif de décodage des séquences de signaux reçus sur la ligne, ledit dispositif de décodage alimentant un dispositif de visualisation image par image. Ce dispositif-récepteur est construit de façon symétrique du dispositif-émetteur. Il peut comporter une mémoire et un dispositif de reconstitution de l'image en cours. Eventuellement, plusieurs images pourront être conservées en mémoire.

Selon l'invention, on dispose également d'un système de transmission pouvant être utilisé à l'aide de lignes téléphoniques ou de lignes télématiques d'un débit équivalent constitué d'un dispositif-émetteur, d'un dispositif-récepteur les deux ayant les caractéristiques que l'on vient de définir, connectés à une interface permettant leur raccordement.

L'invention sera explicitée davantage à l'aide de la description non limitative d'exemples de réalisation qui est donnée ci-après en référence aux dessins annexés, sur lesquels:

- la fig. 1 est un schéma synoptique d'un dispositif d'émission et de réception propre à être raccordé à une ligne téléphonique;

- les figs 2A à 2D illustrent les effets d'un dispositif d'échantillonnage qui peut être utilisé selon l'invention;

- les figs 3A à 3C illustrent les explications relatives à la transformation de l'image du sujet en un dessin animé et à sa transmission;

- les figs 4 et 5 illustrent des explications relatives au filtrage;

les figs 6A et 6B complètent ces dernières explications.

Les dispositifs de transmission d'images par liaison téléphonique présentent, outre l'avantage de permettre aux interlocuteurs de se voir, celui de montrer ou désigner par gestes. Il s'agit donc d'une amélioration à la qualité de la communication qui s'effectue de manière essentiellement verbale. Ils peuvent en principe permettre une communication avec une personne qui peut être affectée de surdité totale mais est capable de lire les mouvements des lèvres d'un de ses interlocuteurs ou entre deux sourds-muets qui communiquent par le langage des signes. Cependant, dans la mesure où le dispositif du type visiophone ne se répand que très lentement en raison du volume d'informations très élevées qu'il est nécessaire de transmettre et de la complexité corrélative des réseaux de transmission à installer, les possibilités de communication à distance pour des personnes affectées de surdité sont en pratique très limitées.

Des études qui ont présidé à l'invention ont fait ressortir que la transmission précise du mouvement des lèvres ou des gestes, dans le cas d'une transmission par signes, devait s'effectuer à une cadence d'au moins environ 12 images par seconde. Cette cadence est nécessaire, compte tenu de la rapidité de certains gestes et de la nécessité de conserver un certain confort visuel pour l'observateur en évitant de produire une image trop saccadée.

Les lignes téléphoniques ordinaires ont un débit de transmission d'environ 4800 bauds. Dans les conditions ordinaires de transmission de l'image d'un sujet telle que la tête d'une personne ou son buste et ses membres supérieurs par des procédés de type télévisuel, une telle cadence est tout à fait insuffisante.

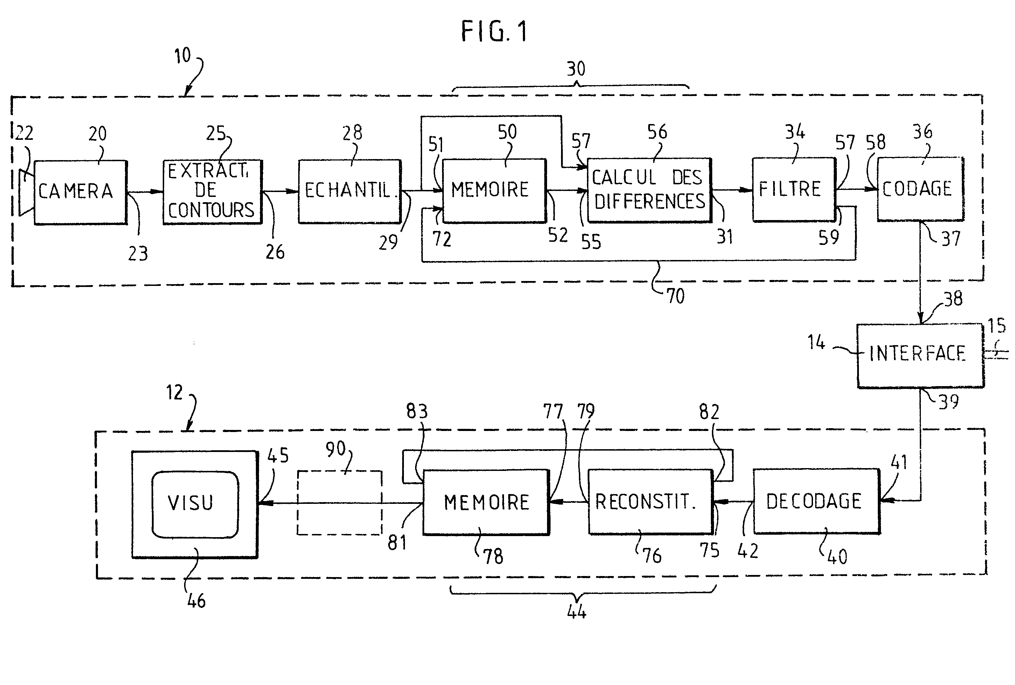

Un exemple de poste d'émission et de réception d'informations visuelles telles que les mouvements du corps humain selon l'invention comprend (fig. 1) un sous-ensemble d'émission 10 et un sous-ensemble de réception 12 qui sont tous deux raccordés par une interface 14, ou un dispositif de MODEM (modulateur-démodulateur) classique, à une ligne téléphonique ou télématique 15.

Le sous-ensemble d'émission comprend une caméra 20 pourvue d'un objectif 22 propre à effectuer la saisie d'image du sujet. Elle est montée à cet effet sur un support non représenté de façon à permettre l'obtention d'une image cadrée d'un sujet installé face au poste d'émission-réception 10, 12. Cette caméra 20 est une caméra électronique propre à transformer chacune des images du sujet ou de la scène à transmettre formée sur son écran en une séquence de signaux électroniques apparaissant à sa sortie 23. Les signaux 23 sont exploités par un dispositif d'extraction de contours 25. Ce dispositif, qui peut être d'un type connu dont il sera reparlé ci-après, à la propriété de transformer les signaux de chaque séquence, lesquels sont chacun représentatif du niveau d'éclairement (image en demi-teinte) de chaque point de l'image, en des signaux à deux niveaux seulement (correspondant par exemple aux tons noir et blanc), les signaux de tonalité noire correspondant essentiellement à des points délimitant un ou des contours dans l'image à transmettre. Les signaux apparaissant à la sortie 26 de ce dispositif sous forme de séquence représentent donc une sorte de dessin animé au rythme de, par exemple, douze images par seconde. Les données véhiculées par ces signaux sont alors comprimées avant d'être transmises à l'interface 14.

La compression de données est effectuée par une série de modules juxtaposés comprenant un échantillonneur 28, grâce auquel une division par un facteur prédéterminé du volume total d'informations de chaque séquence est obtenue, et un extracteur d'information de mouvement 30, à la sortie 31 duquel seuls apparaissent des signaux correspondant à des points ayant subi une modification de leur niveau d'éclairement entre deux images de contours successives. Ces signaux sont transmis à un dispositif de filtrage 34, visant notamment à éliminer les points isolés, à la sortie duquel est connecté un codeur 36 réalisant une nouvelle compression des données en fonction d'une analyse de leur structure à l'aide d'une série de règles de codage prédéterminées. La sortie 37 du codeur 36 est reliée à l'entrée émission 38 de l'interface 14.

La sortie 39 de cette interface est reliée à une entrée 41 d'un dispositif de décodage 40 opérant en fonction des mêmes règles que celles du dispositif 36 pour rétablir à sa sortie 42 une séquence de signaux électriques correspondant à un dessin animé du type produit par un dispositif d'émission tel que 10 à une autre extrémité de la ligne 15. Les signaux 42, après traitement dans un dispositif de restitution d'informations d'image 44, sont transmis à l'entrée 45 d'un dispositif de visualisation 46 qui effectue la présentation visuelle image par image à la cadence souhaitée de l'information transmise sur la ligne 15.

Pour réaliser la caméra 20, on peut utiliser une caméra du type comprenant une matrice d'éléments photosensibles du type à transfert de charge de 256 × 256 éléments qui sont couramment disponibles à l'heure actuelle. Bien entendu, le choix de ce type de caméra n'est pas limitatif et d'autres dispositifs de conversion opto-électroniques peuvent être mis en œuvre. Un avantage de ce type de caméra est qu'elle ne nécessite pas d'alimentation à haute tension. Chaque élément photosensible de la caméra produit un signal analogique dont le niveau est proportionnel à l'éclairement reçu par ce point. Ces niveaux d'éclairement de l'ensemble de points d'une image sont lus de façon séquentielle et peuvent être numérisés par un convertisseur analogique-numérique de façon à produire en sortie 23 de la caméra, pour chaque image, une séquence de signaux numériques (256 × 256) de six bits chacun. La position de chacun de ces mots dans la séquence correspond à la position du point dans l'image correspondante.

Le dispositif d'extraction de contours 25 est réalisé, sans que cette précision constitue une limitation, par exemple selon la technique décrite dans le Brevet français publié sous le N° 2 163 815 du 2 juillet 1973 aux noms de NADLER, ADAMOFF et OISEL. Une autre forme de réalisation d'un dispositif d'extraction de contours se trouve également dans le Brevet européen N° 55 965 qui permet facilement la transformation de l'image d'une scène naturelle en une image de contour.

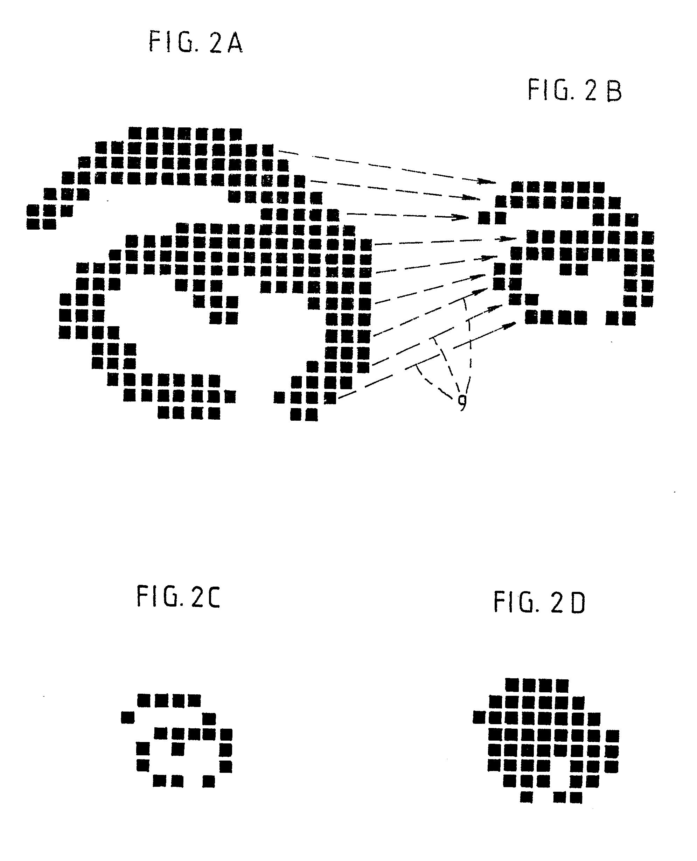

Quel que soit le procédé mis en œuvre pour obtenir l'extraction de contours, le résultat réside dans l'obtention de traits foncés sur fond blanc pour chaque image, ces traits correspondant essentiellement à des délimitations de certaines parties de l'image naturelle par rapport au reste de celle-ci comme le représente par exemple la fig. 2A. Ce dispositif d'extraction de contours réalise une binarisation de l'image en ce sens que chaque point de l'image est représenté dans la séquence à la sortie 26 par un signal binaire de valeur 0 ou 1 selon que le niveau d'éclairement de l'image-contour est blanc ou noir. Les dispositifs d'extraction de contours se caractérisent en ce qu'ils sont sensibles, dans la séquence de signaux issus de la sortie 23 de la caméra 20, à des écarts du niveau d'éclairement entre des points voisins à l'intérieur de chaque image, c'est-à-dire entre des mots correspondant à des groupes de points voisins dans l'image. A cet égard, ils se distinguent des dispositifs de binarisation du type à écrêtage dans lesquels on convertit un signal caractéristique de l'éclairement d'un point en une valeur binaire 0 ou 1 selon que le niveau d'éclairement correspondant dépasse un seuil, que ce seuil soit d'ailleurs fixe ou variable en fonction d'autres critères.

C'est un des aspects importants sous-jacents à l'invention que d'avoir observé qu'une information visuelle suffisante pouvait être transmise à partir de dispositifs d'extraction de contours pour être utilisée avec profit, par exemple dans la communication entre sourds-muets et cela, tout en restant dans les limites des performances d'une ligne téléphonique avec des cadences qui permettent la transmission de l'information en temps réel.

L'échantillonneur 28 est un simple réducteur d'image. En pratique, l'image électrique à la sortie 23 de la caméra 20 est divisée en «lignes» correspondant chacune au balayage d'une ligne de la matrice de photoéléments. Dans le signal électrique correspondant, chacune de ces lignes est séparée par un symbole d'intervalle entre lignes. L'échantillonneur 28 effectue donc une sélection d'un point sur deux ou d'un point sur trois (un bit sur deux ou un bit sur trois) parmi les signaux de chaque ligne et d'une ligne sur deux ou d'une ligne sur trois dans la succession des lignes correspondant à la hauteur de l'image balayée à la surface de l'écran de la caméra 20. Sur les figs 2A et 2B on a relié par les flèches 9 les lignes qui se correspondent dans l'image initiale et dans l'image réduite. La compression analogue opérée sur les points de ces lignes ressort clairement du dessin.

Cet échantillonnage peut être effectué par des moyens classiques, par exemple de compteurs de bit et décompteurs de lignes ou à l'aide d'un microprocesseur convenablement programmé.

Le résultat d'une réduction par un facteur quatre de la surface d'une image (fig. 2A), telle qu'on pourrait la représenter à partir de signaux issus du dispositif d'extraction de contours 25, est représenté à la fig. 2B. Dans ces images, les carrés noirs et blancs correspondent à des bits respectivement de niveau 1 et 0 dans la séquence des signaux de chaque ligne, les lignes se succédant par exemple de haut en bas dans la visualisation qui en est fournie sur les figs 2A et 2B. Sur la fig. 2C, on a représenté le résultat de la réduction par un facteur 9 (un point sur trois pour chaque ligne et une ligne sur trois). On a remarqué qu'il était avantageux de partir d'une image à la sortie du dispositif d'extraction de contours 25 possédant une définition relativement élevée, grâce à l'utilisastion notamment d'une caméra constituée de 256 × 256 éléments, et d'effectuer la réduction après extraction de contours, plutôt que de produire directement l'image électrique à partir d'une caméra de moins haute définition. Sur la fig. 2D, on a représenté le résultat de l'extraction de contours obtenu à partir du même sujet que celui qui a abouti à la fig. 2A, mais en utilisant une caméra de 128 × 128 éléments. Il est aisé de constater une très substantielle perte d'informations de contours lorsqu'on utilise cette dernière façon de procéder.

La compression des données entamée par l'échantillonneur 28 est poursuivie par une série d'étapes de compression de données visant à obtenir un facteur d'environ 20 entre le débit à la sortie de l'échantillonneur 28 et le débit à l'entrée 38 de l'interface 14.

L'extracteur d'informations de mouvement 30 peut comprendre une mémoire 50 capable de stocker chacune des séquences d'images de contours à la sortie 29 de l'échantillonneur 28 et transmise sur son entrée 51 par un dispositif d'adressage convenable. La sortie 52 de la mémoire 50 est connectée à une entrée 55 d'un calculateur de différence 56 dont l'autre entrée 57 est reliée directement à la sortie 29 de l'échantillonneur 28. Lors de l'apparition à la sortie 29 d'une séquence de signaux correspondant à une image de contours, ceux-ci sont comparés point par point dans le calculateur de différence 56 avec les signaux des points de l'image correspondante stockée en mémoire. A cet effet, la mémoire est adressée en lecture au rythme correspondant pour faire apparaître sur sa sortie 52 la séquence des signaux correspondant à l'image précédente. A la sortie 31 du calculateur 56 apparaît une séquence de signaux représentatifs des seules différences entre les deux trains de signaux sur les entrées 55 et 57 du calculateur 56 (fonction OU EXCLUSIF).

De façon plus précise, si, pour un point donné à visualiser, le signal de l'image précédente était à un niveau 0 et le signal de l'image suivante est au niveau 1, un signal de niveau 1 apparaît à l'instant correspondant dans la séquence de la sortie 31. Dans le cas d'une image antérieure au niveau 1 et image courante au niveau 0, un signal 1 apparaît. Dans les autres cas (identité de signal pour l'image antérieure et l'image courante), un signal de niveau 0 est maintenu à la sortie 31. Le dispositif d'adressage en inscription de la mémoire 50 par l'entrée 51 est prévu pour effectuer l'inscription de cette mémoire avec un léger retard par rapport à sa lecture de façon telle que les points successifs de l'image de contours courante soient inscrits immédiatement après la lecture des points correspondants de l'image précédente (adressage d'une mémoire vive en mode lecture modification écriture (Read Modified Write).

La commande et le fonctionnement du dispositif 30 peuvent s'effectuer sous le pilotage de microprocesseurs convenablement programmés ou à l'aide de circuits intégrés du type courant, selon des techniques bien connues de l'art.

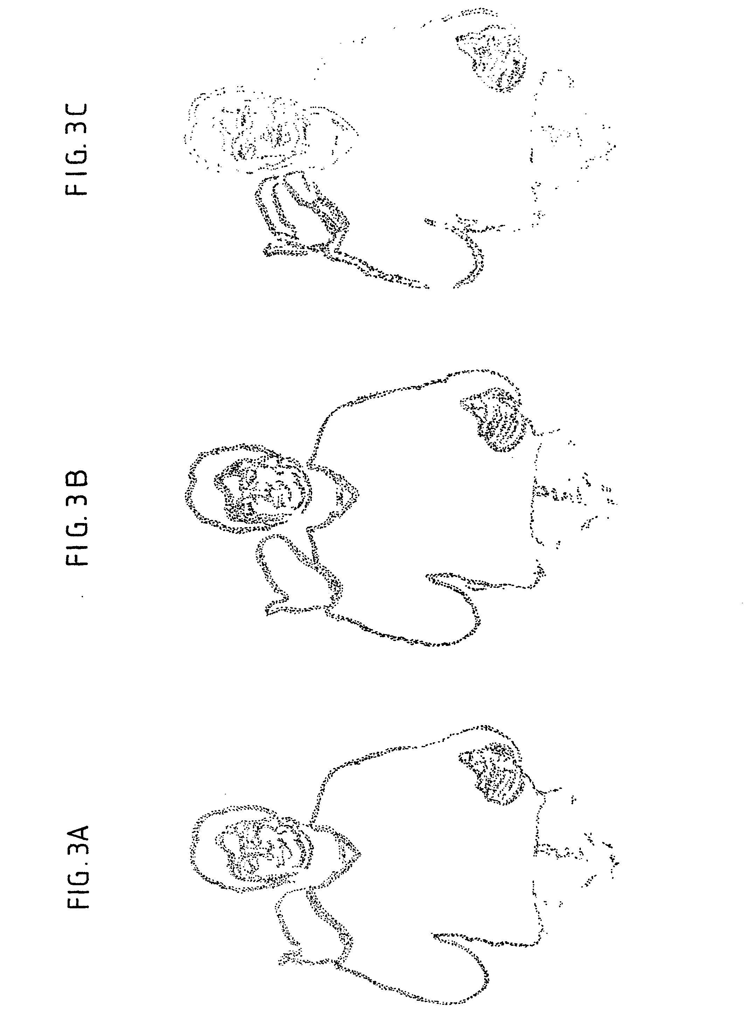

Sur la fig. 3A, on a représenté une image de contours du buste et du visage d'un sujet en train de faire un geste de la main droite telle qu'elle peut correspondre à une séquence de signaux à la sortie de l'extracteur de contours 25.

Sur la fig. 3B, on a représenté la position du bras du sujet lors de la séquence de contours suivante. Sur la fig. 3C, on a montré une image correspondant aux variations entre les images des figs 3A et 3B. La séquence de signaux à la sortie 31 du calculateur de différence 56 correspond aux seuls points représentés sur la fig. 3C. Ce signal série correspond donc à une information de mouvement affectant le sujet à visualiser. Il s'ensuit donc une réduction du volume de l'information à transmettre par rapport à la totalité de l'image de contours.

A cet égard, d'autres techniques de compression peuvent être mises en œuvre en fonction des modifications intervenant d'une image à l'autre et de l'expérience gagnée au cours de la transmission des images précédentes. En particulier, la prise en compte du passé peut ne pas se limiter à la dernière image. Les techniques connues d'analyse du mouvement, dont une revue peut être trouvée dans un article de H. M. NAGEL, Analysis Techniques for Images Sequences Proc. Int. Joint Conf. on Pattern Recognition Kyoto, Japon, 1978, ou T.S. HUANG Ed. Image Sequence Analysis, Springer, Berlin, 1981, permettent d'utiliser plusieurs images antérieures pour prédire l'image courante. C'est la différence entre l'image prédite et l'image mesurée qui fait alors l'objet du traitement d'un opérateur tel que 56 pour la transmission d'une chaîne de signaux comprimés vers la ligne téléphonique.

La séquence de signaux de sortie 31 comprend des informations de deux types: d'une part, les signaux correspondant à des déplacements francs de certaines parties du contour entre deux images successives. Ces signaux constituent l'information à transmettre. D'autre part, elle comprend de nombreux signaux correspondant à des «points isolés» dus à de faibles variations de contraste inévitables dans un système mettant en œuvre une caméra telle que 20. Sur la fig. 3C, on a représenté, outre les variations de positions correspondant à des mouvements francs, de tels points isolés. On remarque que les variations franches de contours affectent essentiellement les bras et les mains. On trouve des points isolés sur toute la surface du corps et dans l'arrière-plan de l'image avec une densité relativement faible. Au contraire, il existe une forte concentration de points «isolés» dans le visage. Cette dernière résulte de la mobilité d'expression du visage d'un interlocuteur en train de parler. Cette mobilité elle-même constitue un élément significatif de la communication par signes et bien entendu un élément essentiel de la communication du mouvement des lèvres pour la lecture labiale.

Le filtre 34 a donc une double fonction: d'une part, il élimine les points isolés dans les zones où la densité de ces points est relativement faible. D'autre part, il conserve ces points là où ceux-ci sont présents en concentration élevée, en pratique dans la zone du visage.

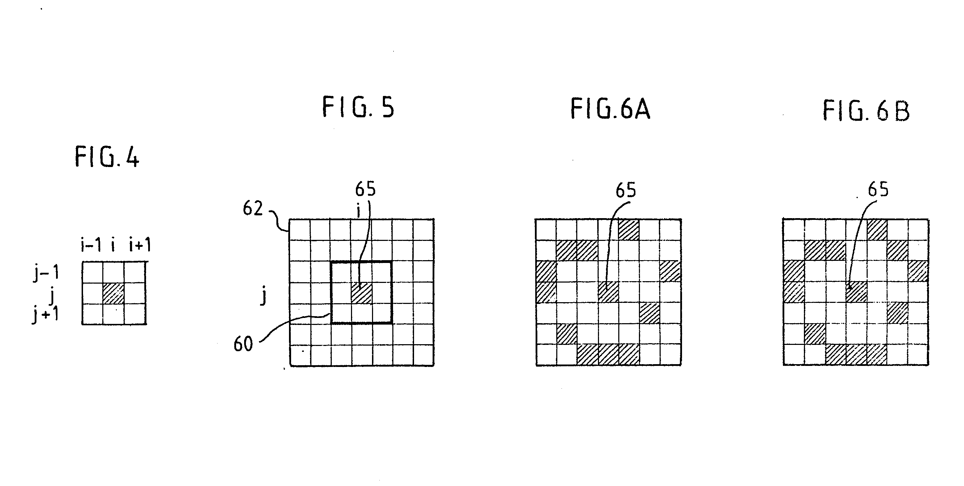

La détection des points isolés par le filtre s'effectue comme l'illustre la fig. 4 à l'aide d'une fonction à fenêtre. La fenêtre représente des valeurs d'une variable de l'image dans un voisinage autour de chaque point d'intérêt. Ici, on considère une matrice de 3 × 3 points pour définir la fenêtre d'exploration. Pour un point d'intérêt de coordonnées i, j dans la matrice de points d'images correspondant à la séquence de signaux entrant dans le filtre, on considère donc les points appartenant à l'intersection des ensembles de lignes j–1 à j+1 et de colonnes i–1 à i+1. Soit X la propriété d'être un point de différence, c'est-à-dire correspondant au passage d'un signal 1 à 0 ou d'un signal 0 à 1 dans la séquence de signaux 31, comme on vient de l'indiquer précédemment; on peut définir par $X_{is}$ la propriété d'être un point de différence isolé, correspondant à la configuration de la fig. 4 ou la valeur de X est différente pour le point de coordonnées i, j de celle qu'elle a pour tous les points entourant celui-ci dans la fenêtre considérée. En algèbre booléenne, on peut écrire:

$$X_{is} = \overline{X}_{i-1,j-1}\ \overline{X}_{i-1,j}\ \overline{X}_{i-1,j+1}\ \overline{X}_{i,j-1}\ X_{i,j}$$
$$\overline{X}_{i,j+1}\ \overline{X}_{i+1,j-1}\ \overline{X}_{i+1,j}\ \overline{X}_{i+1,j+1}$$

où la fonction $\overline{X}$ indique l'absence de la propriété, selon la notation habituelle.

Ainsi, l'ensemble des signaux transmis à l'entrée du filtre 34 peut être soumis à un traitement du type qui vient d'être défini, par exemple à l'aide d'une mémorisation et d'une interrogation sélective des signaux ainsi mémorisés en fonction de la fenêtre définie, l'ensemble s'effectuant sous la commande d'un microcircuit ou d'un microprocesseur convenablement programmé.

Ayant ainsi détecté les points de différences isolés dans une séquence, le dispositif analyse la densité de ces points sur l'ensemble de l'image pour rejeter les seuls points isolés qui correspondent à des zones où leur densité est inférieure à un seuil prédéterminé. Ceci est effectué en considérant une fenêtre d'analyse de taille plus grande telle que représentée à la fig. 5, comprenant une matrice de 7 × 7 éléments. Cette fenêtre n'est scrutée que pour des points de différence isolés déjà détectés dans une fenêtre telle que 60 identique à celle de la fig. 4. Cette fenêtre 60 se trouve au centre de la fenêtre 62 de la fig. 5 et seuls sont analysés sur le plan de la densité les 40 points de la fenêtre 62 qui ne se trouvent pas inclus dans la fenêtre 60.

Le calcul de densité s'effectue par comptage du nombre de points de différences parmi les 40 points considérés, suivi d'un test. Si, par exemple, on utilise un seuil de 30%, le point isolé 65 ne sera pas retenu tant que l'on comptera moins de 12 points de différence de même nature dans la fenêtre de 40 points testée. Tel sera le cas dans l'exemple de la fig. 6A. Si, au contraire, le nombre de points isolés dans la zone testée est égal ou supérieur à 12 (cas de la fig. 6B), le point isolé 65 sera retenu et le signal correspondant transmis à la sortie 57 du filtre 34 en direction de l'entrée 58 du codeur 36.

Ainsi, la fonction de détection de points isolés $X_{is}$ est appliquée successivement à tous les points de différence de l'image. La fonction de seuil de densité n'est appliquée qu'aux seuls points de différence isolés.

La suppression d'un point isolé dans le dispositif de filtrage 34 se traduit par l'émission d'un signal d'adressage correspondant à une sortie 59 du filtre 34 pour venir inverser le contenu de la mémoire 50 (ligne 70 et entrée 72) correspondant à ce point pour des raisons qui apparaîtront clairement ultérieurement.

Le dispositif 36 effectue un codage de la séquence de signaux apparaissant sur son entrée 58 pour chaque image. Il existe différents procédés de codage d'images en noir et blanc permettant de comprimer les informations séquentielles sur l'entrée 58 en produisant des séries de mots numériques à la sortie 37 de transmission sur la ligne 15 par l'interface 14. Un procédé type de codage dit «par plage» consiste à produire un code caractéristique de chaque transition blanc-noir ou 0, 1 dans la séquence de signaux à l'entrée 58, suivi d'une indication d'un code de la transition noir-blanc immédiatement suivante, avec l'indication du nombre de points entre l'apparition de ces deux transitions. D'autres systèmes de codage permettant une compression encore plus efficace des données sont connus tels que par exemple les procédés de codage dits par blocs (quad-tree). Un certain nombre de tels procédés de codage sont décrits par exemple dans le Numéro de Juillet 1980 de la Revue "Proceedings of The IEEE" consacré au codage des images graphiques.

En ce qui concerne la réception, les séquences de signaux apparaissant à la sortie 39 de l'interface 14 correspondent à des séquences issues d'un codeur 36 d'un appareillage semblable en un autre poste raccordé au réseau de transmission téléphonique auquel appartient la ligne 15. Ils sont décodés par le décodeur 40 en fonction d'un code inverse du code utilisé en émission. Si les signaux à la sortie 42 correspondent à des points de différence entre images consécutives, ils sont appliqués à une entrée 75 d'un dispositif de reconstruction d'image 76 à l'intérieur du restituteur 44. Une mémoire 78 a une entrée 77 connectée à la sortie 79 du dispositif de reconstruction 76. La sortie 81 de cette mémoire est connectée à l'entrée 45 de ce dispositif de visualisation qui peut, par exemple, consister en un tube cathodique du genre utilisé pour les terminaux informatiques.

De préférence, la mémoire 78 n'est pas limitée au stockage d'une seule image. Elle a une capacité de mémorisation de plusieurs images successives complètes propres à se succéder à la sortie 81 pour l'alimentation du dispositif de visualisation. Elle comprend notamment une zone de mémoire directement adressable à partir de l'entrée 77 pour la reconstruction de chaque image en cours de réception.

Cette reconstruction peut s'effectuer d'une manière symétrique de la décomposition pratiquée par l'extracteur de mémoire 30. Ainsi, pour chaque séquence sur l'entrée 75 correspondant à une image courante, le reconstructeur 76 reçoit, sur une entrée 82, des signaux en provenance d'une sortie 83 de la mémoire 78 et correspondant à l'image précédemment reçue et reconstruite. Les signaux sur les entrées 75 et 82 du dispositif de reconstruction 76 sont admis en synchronisme de façon à constituer point par point une image de contours complète, chaque point de l'image précédente étant mis à jour par l'information correspondante amenée sur l'entrée 75. La séquence d'images reconstruites 79 est alors stockée en mémoire 78. On remarque que, du fait de la suppression de certains points isolés par le filtre 34, l'image ainsi reconstruite ne correspondrait pas à l'image dans la mémoire 50 du dispositif émetteur si l'on n'avait pas pris soin, pour chaque point isolé supprimé à la transmission, d'inverser l'information correspondante dans cette mémoire 50.

Les procédés de compression de données à l'émission qui ont été précédemment évoqués et, notamment, le procédé mis en œuvre par le codeur 36, introduisent un retard variable dans la transmission de l'image. Il en résulte que le décodage dans le décodeur 40 et la reconstruction par le dispositif de restitution 44, qui nécessitent à la fois la connaissance d'une image complète et la réception des informations correspondant à l'image en cours, introduisent un certain décalage dans le temps entre le début de la réception d'informations à la sortie 39 de l'interface et l'apparition d'une image complète sur le dispositif de visualisation 46. Le stockage des informations numériques correspondant à plusieurs images dans la mémoire 78 permet de réaliser une uniformisation du débit des images transmises par la sortie 81 au dispositif de visualisation malgré les variations de transmission évoquées ci-dessus. On parvient ainsi à synchroniser ou accorder la cadence de visualisation des images au dispositif 46 sur la cadence de prise de vue de la caméra 20, et cela malgré des dilatations ou des compressions dans le temps de la transmission des séquences d'images le long de la chaîne qui les sépare.

En outre, en raison de ces décalages temporels et du retard résultant du remplissage des différentes zones tampons dans la mémoire 78, un certain délai existe entre l'établissement de la communication entre un émetteur et un récepteur et l'apparition d'une image complète sur la visualisation 46. Ce temps mort peut être meublé par une information présentée sous la forme d'un texte alphanumérique et pouvant correspondre, par exemple, au nom de l'appelant ou à un code lui appartenant. Ainsi, l'appelé peut recevoir à l'avance certaines informations relatives à la communication visuelle sur le point de s'établir. Il est prévu, en outre, un dispositif de réinitialisation permanente de l'image visualisée au cours de la transmission. En effet, la présence inévitable d'erreurs de transmission ou de parasites sur la ligne pourrait avoir pour effet une détérioration progressive de l'image reconstruite. Pour éviter ce phénomène, on prévoit de réactualiser une petite portion de chaque image visualisée directement à partir d'informations issues du dispositif d'extraction de contours 25 ou de l'échantillonneur 28, par une ligne non représentée. Ces informations, qui peuvent par exemple correspondre à 1% de la séquence d'image contours, ou à une ligne par image, sont transmises directement sur l'interface 38 à la place de la portion comprimée et codée de la séquence correspondante pour être utilisées en aval du décodeur 40. A l'arrivée, elles sont également directement amenées à l'entrée de la visualisation 45. Les informations annonçant le début et la fin des signaux en clair permettent le calage de cette information à l'intérieur de la séquence correspondant à chaque image. Ce calage est modifié d'image à image de façon à réactualiser la totalité de l'image visualisée toutes les cent séquences si l'information de réactualisation correspond à 1% de l'image de contours transmise.

Sur la fig. 1, on a représenté, entre la mémoire 78 et le dispositif de visualisation 46, un dispositif 90 d'amélioration d'image (enhancement) propre à effectuer un lissage entre les points, améliorant la continuité des lignes de contours et diminuant les effets de saccade des points qui subissent une variation de position entre une image et la suivante. De tels dispositifs sont connus en soi.

Outre l'application qui vient d'être évoquée pour la télécommunication entre des personnes affectées de surdité, l'invention s'applique à la transmission en temps réel sur des lignes téléphoniques ordinaires ou télématiques de tout autre phénomène nécessitant une cadence de transmission d'informations visuelles semblables à celles des mouvements du corps humain ou une cadence inférieure. En particulier, elle trouve son utilité partout où l'information peut se trouver efficacement transmise sous la forme de dessins par opposition à des images en demi-teinte. Elle trouve par là, même une application éventuelle à la constitution et à la transmission de dessins animés et permet également d'améliorer sensiblement les techniques de vidéo-conférence évoquées ci-dessus.

Il est clair que l'invention n'est d'ailleurs pas limitée à la transmission d'informations visuelles à distance et qu'elle peut être mise à profit par exemple pour effectuer un stockage numérique à faible débit en vue d'une diffusion ou restitution différée de l'information.

**Revendications**

1. Procédé de transmission sur une ligne de télécommunication d'informations visuelles, du type dans lequel on effectue une prise de vue et on produit une séquence de signaux électriques pour chaque image saisie, on convertit en signaux binaires les informations correspondant à chaque point de l'image, on code et on transmet les signaux binaires ainsi obtenus en un point d'un réseau de télécommunication et on recueille ces signaux en un autre point du réseau pour visualiser l'image correspondante, caractérisé en ce qu'en vue notamment de transmettre sur une ligne de type téléphonique des mouvements du corps humain, notamment des lèvres ou des gestes et signes compréhensibles par des personnes affectées de surdité, on détecte dans chaque séquence des signaux caractéristiques de contours dans l'image saisie.

2. Procédé selon la revendication 1, caractérisé en ce qu'on transmet essentiellement une information caractéristique du mouvement des points de contours détecté dans chaque image et qu'on reconstitue à la réception les contours de l'image saisie à partir de la réception de ces signaux caractéristiques de mouvement.

3. Procédé selon la revendication 2, caractérisé en ce qu'on compare la position des points des contours détectés dans chaque image avec celle des points de contours de l'image précédente pour ne transmettre que des signaux caractéristiques des modifications de l'information binaire représentative de chaque point de l'image.

4. Procédé selon la revendication 2 ou 3, caractérisé en ce que, avec chaque séquence de signaux d'image, on transmet directement une fraction de l'information correspondant à l'image de contours réalisée et que l'on modifie cette fraction d'information d'une image à la suivante afin d'effectuer une remise à jour périodique de l'image reconstituée à la réception.

5. Procédé selon l'une des revendications 1 à 4, caractérisé en ce qu'on prévoit en outre la transmission d'un texte propre à être visualisé en caractères alphanumériques pendant notamment la période d'initialisation de la première image complète.

6. Procédé selon l'une des revendications 1 à 5, caractérisé en ce que, en vue de leur retransmission en différé, les signaux obtenus après codage sont transmis à une mémoire à une cadence du même ordre que celle d'une ligne téléphonique ordinaire, en vue notamment de la mémorisation d'informations correspondant à des mouvements du corps humain.

7. Dispositif pour l'élaboration en temps réel de signaux électriques représentatifs d'informations visuelles, du type comprenant une caméra (20) propre à capter ces informations pour convertir chaque image en une séquence de signaux électriques représentatifs, des moyens pour binariser les signaux correspondant à chaque point de l'image dans une séquence et des moyens de codage des séquences de signaux élaborés, caractérisé en ce qu'en vue notamment de produire de tels signaux à une cadence compatible avec leur transmission sur une ligne du type téléphonique, notamment pour des informations correspondant à des mouvements du corps humain, lesdits moyens de binarisation comprennent, entre ladite caméra (20) et lesdits moyens de codage (36), un dispositif d'extraction de contours (25) sensible à des écarts du niveau d'éclairement de points voisins à l'intérieur de chaque image.

8. Dispositif selon la revendication 7, caractérisé par des moyens de compression d'information comprenant, en sortie du dispositif d'extraction de contours (25), un moyen (30) pour sélectionner des informations qui caractérisent le mouvement des points de contours.

9. Dispositif selon la revendication 8, caractérisé en ce que ledit moyen de sélection (30) comprend un moyen de comparaison point par point de chaque image de contours avec l'image précédente.

10. Dispositif selon l'une des revendications 7 à 9, caractérisé en outre par un dispositif de filtrage (34) pour rejeter les signaux de chaque séquence correspondant à des points isolés.

11. Dispositif selon l'une des revendications 8 ou 9, caractérisé par un dispositif de filtrage en sortie desdits moyens de sélection pour rejeter les signaux de chaque séquence correspondant à des modifications de l'information relative à un point déterminé entre une image actuelle et une image précédente pour des points isolés dans l'image.

12. Dispositif selon la revendication 11, caractérisé en ce que ledit dispositif de filtrage (34) est opératoire pour rejeter lesdites informations relatives à des points isolés seulement dans le cas où la densité de tels points isolés est inférieure à un seuil prédéterminé.

13. Dispositif selon l'une des revendications 11 ou 12, caractérisé en ce que les moyens de sélection (30) comprennent une mémoire (50) d'informations relatives aux points d'une image précédente, et en ce qu'il est prévu des moyens pour corriger l'information dans cette mémoire en fonction des informations supprimées à la sortie desdits moyens de filtrage (34).

14. Dispositif selon l'une des revendications 7 à 12, caractérisé en ce qu'il comprend, à la sortie du dispositif d'extraction de contours (25), des moyens d'échantillonnage des informations de chaque séquence propres à effectuer une réduction par un facteur prédéterminé de l'image correspondant à chaque séquence issue du dispositif d'extraction (25).

15. Dispositif selon l'une des revendications 7 à 14, caractérisé en ce que la cadence de sortie des signaux codés n'est pas supérieure à 4800 bauds.

16. Dispositif récepteur de signaux engendrés selon le procédé d'une des revendications 1 à 6 et représentatifs d'informations visuelles à une cadence compatible avec le débit de lignes de type téléphonique, notamment pour des informations correspondant à des mouvements du corps humain, et pour la visualisation de suites d'images telles que des dessins animés correspondant, en réception, à de tels signaux, caractérisé en ce qu'il comprend un dispositif de décodage (40) de séquences de signaux reçus en série sur la ligne pour alimenter un dispositif de visualisation image par image.

17. Dispositif récepteur selon la revendication 16 dans lequel les séquences de signaux numériques correspondent chacune à des modifications d'une information binaire relatives à un point de l'image transmise, par rapport au point correspondant de l'image précédemment reçue, caractérisé en ce qu'il comprend une mémoire (78) de séquences de signaux représentatifs de l'image précédente, un dispositif de reconstruction de l'image en cours (76) à partir des signaux reçus et des signaux en mémoire, ce dispositif de reconstruction étant branché à l'entrée de la mémoire (78) et le dispositif de visualisation (46) étant alimenté à partir de cette mémoire.

18. Dispositif récepteur selon l'une des revendications 16 ou 17, caractérisé en ce qu'il comprend une mémoire numérique (78) possédant une capacité suffisante pour la mémorisation de plusieurs images du dessin animé à visualiser en sus de l'image en cours de reconstruction lors de la réception de chaque séquence.

19. Système émetteur-récepteur, caractérisé en ce qu'il comprend un dispositif émetteur selon l'une des revendications 7 à 15, et un dispositif récepteur selon l'une des revendications 16 à 18, connectés à une interface (14) permettant leur raccordement à une ligne téléphonique (15).

**Claims**

1. Process for the transmission, over a telecommunication line, of visual information, of the type in which a view is taken and a sequence of electrical signals is produced for each image recorded, the information corresponding to each point of the image is converted into binary signals, the binary signals thus obtained are coded and transmitted at a point of a telecommunications network and these signals are collected at another point of the network in order to visualize the corresponding image, characterized in that, with a view, in particular, to transmitting over a line of the telephone type movements of the human body, in particular of the lips, or gestures and signs comprehensible by persons affected by deafness, signals characteristic of contours in the recorded image are detected in each sequence.

2. Process according to claim 1, characterized in that essentially one set of information characteristic of the movement of the contour points which is detected in each image is transmitted, and, on reception, the contours of the image recorded are reconstituted with effect from the reception of these signals characteristic of movement.

3. Process according to claim 2, characterized in that the position of the contour points detected in each image is compared with that of the contour points of the preceding image, in order to transmit only signals characteristic of the modifications of the binary information representing each point of the image.

4. Process according to claim 2 or 3, characterized in that, together with each sequence of image signals, there is transmitted directly a fraction of the information corresponding to the contour image formed, and in that this fraction of information is modified from one image to the following one in order to carry out a periodic updating of the image reconstituted on reception.

5. Process according to one of claims 1 to 4, characterized in that provision is also made for the transmission of a text suitable to be visualized in alphanumeric characters during, in particular, the period of initialization of the first complete image.

6. Process according to one of claims 1 to 5, characterized in that, with a view to their retransmission following recording, the signals obtained after coding are transmitted to a memory at a rate of the same order as that of an ordinary telephone line, with a view, in particular, to the memorization of information corresponding to movements of the human body.

7. Device for the generation, in real time, of electrical signals representing visual information, of the type comprising a camera (20) suitable to collect this information for the purpose of converting each image into a sequence of representative electrical signals, means for converting into binary form the signals corresponding to each point of the image in a sequence and means for coding the sequences of signals generated, characterized in that, with a view, in particular, to producing such signals at a rate compatible with their transmission over a line of the telephone type, particularly for information corresponding to movements of the human body, the said means for conversion into binary form comprise, between the said camera (20) and the said coding means (36), a device for the extraction of contours (25) which is sensitive to differences in the level of illumination of neighbouring points within each image.

8. Device according to claim 7, characterized by means for the compression of information comprising, at the output of the device for the extraction of contours (25), a means (30) for selecting information which characterizes the movement of the contour points.

9. Device according to claim 8, characterized in that the said selecting means (30) comprises a means for the comparison, point by point, of each contour image with the preceding image.

10. Device according to one of claims 7 to 9, characterized, in addition, by a filtering device (34) to reject the signals of each sequence corresponding to isolated points.

11. Device according to one of claims 8 or 9, characterized by a filtering device at the output of the said selecting means to reject the signals of each sequence corresponding to modifications of the information relative to a determined point between a current image and a preceding image for isolated points in the image.

12. Device according to claim 11, characterized in that the said filtering device (34) is operative to reject the said information relative to isolated points only in the case where the density of such isolated points is less than a predetermined threshold.

13. Device according to one of claims 11 or 12, characterized in that the selecting means (30) comprise a memory (50) of information relative to the points of a preceding image, and in that means are provided for correcting the information in this memory as a function of the information suppressed at the output of the said filtering means (34).

14. Device according to one of claims 7 to 12, characterized in that it comprises, at the output of the device for the extraction of contours (25), means for sampling the information of each sequence, which are capable of effecting a reduction by a predetermined factor of the image corresponding to each sequence emerging from the extraction device (25).

15. Device according to one of claims 7 to 14, characterized in that the rate of output of the coded signals does not exceed 4,800 bauds.

16. Device for receiving signals generated according to the process of one of claims 1 to 6 and representing visual information at a rate compatible with the capacity of lines of the telephone type, particularly for information corresponding to movements of the human body, and for the visualization of sequences of images such as animated drawings corresponding, at the reception stage, to such signals, characterized in that it comprises a device (40) for decoding sequences of signals received in series over the line to supply a device for visualization image by image.

17. Receiving device according to claim 16, in which the sequences of digital signals each correspond to modifications of a set of binary information relative to a point of the transmitted image in relation to the corresponding point of the image previously received, characterized in that it comprises a memory (78) of sequences of signals representing the preceding image, a device for reconstructing the current image (76) from the signals received and from the signals in memory, this reconstructing device being connected to the input of the memory (78) and the device for visualization (46) being fed from this memory.

18. Receiving device according to one of claims 16 or 17, characterized in that it comprises a digital memory (78) having a capacity sufficient for the memorization of several images of the animated drawing to be visualized in addition to the image in the course of reconstruction on reception of each sequence.

19. Emitter-receiver system, characterized in that it comprises an emitting device according to one of claims 7 to 15 and a receiving device according to one of claims 16 to 18, connected to an interface (14) permitting their connection to a telephone line (15).

**Patentansprüche**

1. Verfahren zur Übertragung von visuellen Informationen über eine Telekommunikationsleitung, derjenigen Art, bei der eine Aufnahme gemacht und für jedes aufgenommene Bild eine Sequenz elektrischer Signale erzeugt wird, wobei die jedem Punkt dieses Bildes entsprechenden Daten in Binärsignale umgewandelt und die so an einer Stelle des Telekommunikationsnetzes erstellten binären Signale codiert und übertragen, und diese Signale an einer anderen Stelle des Netzes empfangen werden, so dass das entsprechende Bild dargestellt werden kann, dadurch gekennzeichnet, dass, insbesondere bei der über eine Fernsprechleitung erfolgenden Übertragung von Bewegungen des menschlichen Körpers, insbesondere wiederum von Lippenbewegungen oder Gesten und Gebärden zur Verständigung unter Schwerhörigen, in jeder Sequenz charakteristische Konturen der Aufnahme erkennbar sind.

2. Verfahren gemäss Anspruch 1, dadurch gekennzeichnet, dass im wesentlichen eine charakteristische Information, der auf den einzelnen Bildern erkannten Bewegung von Konturenpunkten übertragen und die Konturen dieser Aufnahme bei Empfang aufgrund des Empfangs dieser charakteristischen Bewegungssignale rekonstruiert werden.

3. Verfahren gemäss Anspruch 2, dadurch gekennzeichnet, dass die Position der auf den einzelnen Bildern erkannten Konturenpunkte mit der Position der Konturenpunkte des jeweils vorhergehenden Bildes verglichen wird, so dass lediglich charakteristische Signale von Änderungen der binären Information, die jeden Punkt des Bildes darstellt, übertragen werden.

4. Verfahren gemäss Anspruch 2 oder 3, dadurch gekennzeichnet, dass bei jeder Sequenz von Bildsignalen ein Teil der für das dargestellte Konturenbild repräsentativen Information direkt übertragen wird und dieser Informationsanteil jeweils von einem Bild zum nächsten modifiziert wird, so dass eine periodische Aktualisierung des bei Empfang rekonstruierten Bildes erfolgt.

5. Verfahren gemäss einem der Ansprüche 1 bis 4, dadurch gekennzeichnet, dass ferner die Übertragung eines in alphanumerischen Zeichen darstellbaren Textes, insbesondere für die Phase der Initialisierung des ersten vollständigen Bildes, vorgesehen ist.

6. Verfahren gemäss einem der Ansprüche 1 bis 5, dadurch gekennzeichnet, dass die codierten Signale im Hinblick auf die zeitversetzte Weitergabe an einen Speicher übertragen werden, dessen Transfergeschwindigkeit mit der einer normalen Fernsprechleitung vergleichbar ist, insbesondere hinsichtlich der Speicherung von Informationen, die Körperbewegungen entsprechen.

7. Einrichtung zur Erzeugung von visuelle Informationen darstellenden elektrischen Signalen in Echtzeit, bestehend aus einer Kamera (20), die geeignet ist, diese Informationen so aufzunehmen, dass jedes Bild in eine Sequenz aussagefähiger elektrischer Signale umgewandelt wird, aus Geräten, die jeden einzelnen Bildpunkt in entsprechende Signale innerhalb einer Sequenz digitalisieren und aus Codierern für die Sequenzen der generierten Signale, dadurch gekennzeichnet, dass die genannten Digitalisierungsgeräte – insbesondere im Hinblick auf die Erzeugung derartiger Signale mit einer Transfergeschwindigkeit, die mit der Übertragung über eine Fernsprechleitung kompatibel ist, insbesondere wiederum bei Informationen im Zusammenhang mit Körperbewegungen – zwischen der erwähnten Kamera (20) und den erwähnten Codiergeräten (36) einen Konturenleser (25) beinhalten, der auf Helligkeitsunterschiede benachbarter Punkte innerhalb jedes einzelnen Bildes reagiert.

8. Einrichtung gemäss Anspruch 7, dadurch gekennzeichnet, dass sie Komprimierungsgeräte umfasst, die am Ausgang des Konturenlesers (25) ein Gerät (30) zur Selektion derjenigen Informationen aufweisen, die für die Bewegung der Konturenpunkte repräsentativ sind.

9. Einrichtung gemäss Anspruch 8, dadurch gekennzeichnet, dass der erwähnte Selektierer (30) ein Gerät umfasst, das jedes Konturenbild Punkt für Punkt mit dem vorangegangenen Bild vergleicht.

10. Einrichtung gemäss einem der Ansprüche 7 bis 9, ferner gekennzeichnet durch eine Filtereinrichtung (34), mit der aus den einzelnen Sequenzen die Signale eliminiert werden, die isolierten Punkten entsprechen.

11. Einrichtung gemäss einem der Ansprüche 8 oder 9, gekennzeichnet durch eine Filtereinrichtung an den Ausgängen der erwähnten Selektierer, mit der aus den einzelnen Sequenzen die Signale eliminiert werden, die Änderungen der Information zu einem bestimmten Punkt zwischen einem aktuellen und einem vorangegangenen Bild wiedergeben, und zwar hinsichtlich isolierter Punkte dieses Bildes.

12. Einrichtung gemäss Anspruch 11, dadurch gekennzeichnet, dass die erwähnte Filtereinrichtung (34) die erwähnten Informationen hinsichtlich isolierter Punkte nur eliminiert, wenn die Zeichendichte derartiger isolierter Punkte unterhalb eines festgelegten Wertes liegt.

13. Einrichtung gemäss einem der Ansprüche 11 oder 12, dadurch gekennzeichnet, dass die Selektierer (30) einen Speicher (50) für Informationen über die Punkte eines vorangegangenen Bildes aufweisen und dass Geräte vorgesehen sind, welche die Informationen innerhalb dieses Speichers in Abhängigkeit von den am Ausgang der erwähnten Filter (34) unterdrückten Informationen korrigieren sollen.

14. Einrichtung gemäss einem der Ansprüche 7 bis 12, dadurch gekennzeichnet, dass sie am Ausgang des Konturenlesers (25) über Abtastgeräte für die Informationen der einzelnen Sequenzen verfügt, die jedes einzelne Bild, das einer vom Konturenleser ausgegebenen Sequenz entspricht, um einen zuvor festgelegten Faktor reduzieren.

15. Einrichtung gemäss einem der Ansprüche 7 bis 14, dadurch gekennzeichnet, dass die Übertragungsgeschwindigkeit der codierten Signale nicht über 4800 Baud beträgt.

16. Empfangseinrichtung für die gemäss dem Verfahren eines der Ansprüche 1 bis 6 erzeugten Signale, welche visuelle Informationen einer Kadenz darstellen, die mit der Übertragungsrate von Fernsprechleitungen kompatibel ist, insbesondere im Hinblick auf Informationen, die Körperbewegungen entsprechen, ferner zur Darstellung von zeichentrickähnlichen Bildfolgen, die bei Empfang derartigen Signalen entsprechen, dadurch gekennzeichnet, dass diese Einrichtung über eine Decodiereinrichtung (40) für die seriell über die Leitung ankommenden Signalsequenzen verfügt und einen Bildschirm Bild für Bild mit Informationen speist.

17. Empfangseinrichtung gemäss Anspruch 16, innerhalb derer die Sequenzen digitaler Signale jeweils Änderungen einer binären Information in Zusammenhang mit einem Punkt des übertragenen Bildes entsprechen, und zwar im Vergleich zu dem entsprechenden Punkt des zuvor erhaltenen Bildes, dadurch gekennzeichnet, dass diese Einrichtung einen Speicher (78) für die Sequenzen der Signale des vorhergehenden Bildes umfasst, eine Einrichtung zur Rekonstruktion des gegenwärtigen Bildes (76) aus eingehenden Signalen und gespeicherten Signalen, wobei diese Rekonstruktionseinrichtung an den Eingang des Speichers (78) angeschlossen ist und der Bildschirm (46) aus diesem Speicher mit Informationen gespeist wird.

18. Empfangseinrichtung gemäss einem der Ansprüche 16 oder 17, dadurch gekennzeichnet, dass sie über einen digitalen Speicher (78) von ausreichender Kapazität verfügt, so dass mehrere Bilder der darzustellenden Bewegungsfolge über das bei Empfang jeder Sequenz jeweils in der Rekonstruktion befindliche Bild hinaus gespeichert werden können.

19. Sende-Empfangs-System, dadurch gekennzeichnet, dass es eine Sendeeinrichtung gemäss einem der Ansprüche 7 bis 15 und eine Empfangseinrichtung gemäss einem der Ansprüche 16 bis 18 umfasst, die über eine Schnittstelle (14) an eine Fernsprechleitung (15) angeschlossen werden können.

# FIG.1

CAMERA → EXTRACT. DE CONTOURS → ECHANTIL. → MEMOIRE → CALCUL DES DIFFERENCES → FILTRE → CODAGE

INTERFACE

VISU ← MEMOIRE ← RECONSTIT. ← DECODAGE

0 098 763

FIG. 2A

FIG. 2 B

9

FIG. 2C

FIG. 2 D

FIG. 3A          FIG. 3B          FIG. 3C

0 098 763

FIG. 5 FIG.6A FIG.6B

FIG. 4